# EUROPÄISCHE PATENTANMELDUNG

(11) **EP 3 095 499 A1**
(43) Veröffentlichungstag der Anmeldung: **23.11.2016**
(21) Anmeldenummer: 16167079.9
(22) Anmeldetag: 26.04.2016
(51) Int. Cl.: B01D 33/17, B01D 33/60, B01D 33/66, B01D 33/82

(54) **FILTERVORRICHTUNG**

(30) Priorität: 19.05.2015 DE 102015209094
(71) Anmelder: BHS-Sonthofen GmbH, 87527 Sonthofen (DE)
(72) Erfinder: Steidl, Axel Detlef, 87527 Ofterschwang (DE); Lippert, Holger, 87527 Sonthofen (DE); Süß, Wolfgang, 87527 Sonthofen (DE); Schäfer, Martin, 87527 Sonthofen (DE)
(74) Vertreter: Weickmann & Weickmann PartmbB

(57) **Zusammenfassung**

Filtervorrichtung (10) zum Abtrennen von Feststoffen aus einer Suspension, wobei die Filtervorrichtung (10) einen Druckbehälter (12) mit einer Zuführung für Druckmedium umfasst, mittels dessen der Innenraum des Druckbehälters (12) auf einen erhöhten Druck bringbar ist, wenigstens einen in dem Druckbehälter (12) aufgenommenen, um eine vertikale Rotationsachse (A) drehbar gelagerten Filterteller (18) mit einer Mehrzahl von Filterzellen, wobei jeder Filterzelle ein Filtermedium (20) zugeordnet ist, dessen Hochdruckseite dem Innenraum des Druckbehälters (12) zugewandt ist, während dessen Niederdruckseite mit einem mit dem Filterteller (18) umlaufenden Abführleitungssystem (40) verbunden ist, dem seinerseits über eine Drehverbindungsbaugruppe (42) ein stationäres Abführleitungssystem (44) nachgeordnet ist, ein stationäres Zuführleitungssystem zum Zuführen von zu filtrierender Suspension sowie zum Zuführen wenigstens eines Behandlungsmediums zum Behandeln des in den Filterzellen auf dem Filtermedium (20) von den Feststoffen gebildeten Filterkuchens, und eine Druckschleuse zum Austrag der Feststoffe.

## Beschreibung

Die Erfindung betrifft eine Filtervorrichtung zum Abtrennen von Feststoffen aus einer die Feststoffe und eine Suspensionsflüssigkeit enthaltenden Suspension.

Aus dem Stand der Technik sind zu diesem Zweck unterschiedliche Filtervorrichtungen bekannt.

Im Wesentlichen unterscheidet man dabei drei Hauptgruppen von Filtervorrichtungen:
Zum einen gibt es die sogenannten Druckdrehfilter, bei denen die Filterzellen am Außenumfang einer in einem Druckbehälter aufgenommenen Trommel angeordnet sind, welche sich im Betrieb um eine horizontale Achse dreht. Ein großer Nachteil ist hierbei, dass in der unteren Umfangshälfte die Schwerkraft der Filtration bzw. der Kuchenbildung entgegen wirkt.

Des Weiteren sind sogenannte Tellerfilter bekannt, die sich im Betrieb um eine vertikale Achse drehen, so dass sie die Schwerkraft voll ausnutzen können. Zudem können die Kuchenbildung und die Filtration durch einen rückseitig angelegten Unterdruck unterstützt werden. Im Vergleich mit Druckdrehfiltern ist dabei aber die durch die Physik bedingte Begrenzung der zu Kuchenbildung und Filtration nutzbaren Druckdifferenz nachteilig.

Darüber hinaus gibt es noch sogenannte Scheibenfilter. Scheibenfilter sind im Unterschied zu Tellerfiltern um eine horizontale Achse drehend angeordnet und tauchen nur teilweise in die zu filtrierende Suspension ein. Ferner nutzen sie zur Kuchenbildung und Filtration hydrostatische und hydrodynamische Effekte. Analog zu den Druckdrehfiltern können Kuchenbildung und Filtration auch bei diesem Filtertyp nicht vollständig durch die Schwerkraft unterstützt werden.

Wie sich aus dieser Darstellung ergibt, weisen alle diese Arten von Filtern diverse Nachteile auf, die ihre Filtrationseffektivität einschränken.

Es ist daher Aufgabe der vorliegenden Erfindung, eine Filtervorrichtung mit einer verbesserten Filtrationseffektivität anzugeben.

Diese Aufgabe wird erfindungsgemäß gelöst durch eine Filtervorrichtung, umfassend einen Druckbehälter mit einer Zuführung für Druckmedium, mittels dessen der Innenraum des Druckbehälters auf einen verglichen mit dem Umgebungsdruck außerhalb des Druckbehälters erhöhten Druck bringbar ist, wenigstens einen in dem Druckbehälter aufgenommenen, um eine im Wesentlichen vertikal verlaufende Rotationsachse drehbar gelagerten Filterteller, welcher eine Mehrzahl von Filterzellen aufweist, wobei jeder Filterzelle ein Filtermedium zugeordnet ist, dessen eine Seite, die Hochdruckseite, dem Innenraum des Druckbehälters zugewandt ist, während die vom Innenraum des Druckbehälters abgewandte Seite, die Niederdruckseite, mit einem mit dem Filterteller umlaufenden Abführleitungssystem verbunden ist, dem seinerseits über eine Drehverbindungsbaugruppe ein stationäres Abführleitungssystem nachgeordnet ist, ein stationäres Zuführleitungssystem zum Zuführen von zu filtrierender Suspension sowie zum Zuführen wenigstens eines Behandlungsmediums zum Behandeln des in den Filterzellen auf dem Filtermedium von den Feststoffen gebildeten Filterkuchens, und eine Druckschleuse zum Austrag der Feststoffe.

Die erfindungsgemäße Filtervorrichtung vereint die Vorteile von Druckdrehfiltern und Tellerfiltern, ohne gleichzeitig deren Nachteile aufzuweisen. Aufgrund der Verwendung wenigstens eines Filtertellers, auf dessen Oberfläche der Filterkuchen gebildet wird, kann die Schwerkraft an allen Stellen des Filtermediums voll zur Kuchenbildung bzw. zur Filtration genutzt werden. Darüber hinaus ist die Hochdruckseite des Filtermediums dem Innenraum des Druckbehälters zugewandt, so dass die Suspensionsflüssigkeit bzw. das Behandlungsmedium mit einem über dem Atmosphärendruck liegenden Überdruck durch das Filtermedium gepressf wird. Die Addition von Schwerkraft und Druckkraft verbessern die Filtrationseffektivität verglichen mit den bekannten Arten von Filtern.

Das Filtermedium kann beispielsweise aus Metall, Kunststoff, Textil oder Verbundwerkstoff hergestellt sein. Dabei kann ein metallenes Filtermedium an der Filterzelle beispielsweise festgeschweißt sein, während ein Filtermedium aus Kunststoff, Textil oder Verbundwerkstoff vorteilhafterweise an der Filterzelle festgeklemmt sein wird, z.B. mittels einer Befestigungskordel, eines Befestigungsblechs oder dergleichen.

In Weiterbildung der Erfindung kann der Druckbehälter ein topfartig ausgebildetes unteres Behälterteil und ein deckelartig ausgebildetes oberes Behälterteil umfassen. Hierdurch kann erreicht werden, dass der Druckbehälter wenigstens zwei Druckräume umfasst, nämlich einen oberhalb des Filtertellers angeordneten Druckraum und einen unterhalb des Filtertellers angeordneten Druckraum, welche vorzugsweise miteinander in Druckausgleichsverbindung stehen, so dass der im Druckbehälter herrschende Druck den Filterteller nicht nur von dessen Oberseite her beaufschlagt, wo er zur Filtration genutzt wird, sondern auch von dessen Unterseite her. Somit kann der Filterteller in dem Druckbehälter druckausgeglichen angeordnet werden, was zum einen die Ausbildung des Filtertellers mit einer diesen im Hinblick auf die von seiner Oberseite her auf ihn einwirkenden Druckkräfte versteifenden Konstruktion und zum anderen das Vorsehen von Dichtungsmitteln, die ihn an seinem Außenrand zum Druckbehälter hin abdichten, entbehrlich macht.

Ist dabei das deckelartige obere Behälterteil frei von Funktionselementen der Filtervorrichtung ausgelegt, so kann es, beispielsweise für Wartungsarbeiten, ohne großen Demontageaufwand von dem topfartigen unteren Behälterteil abgenommen werden. Diese Aufteilung des Druckbehälters ist auch während der werkseitigen Montage der Filtervorrichtung von großem Vorteil, insbesondere im Hinblick auf Zeit- und Kosteneinsparungsmöglichkeiten. Vorteilhafterweise kann der obere Rand des topfartigen unteren Behälterteils oberhalb des Filtertellers angeordnet sein, um die Zuführung der Zuführleitungen für zu filtrierende Suspension und/oder Behandlungsmedium zur Oberseite des Filtertellers zu erleichtern.

Der Druck in dem Druckbehälter kann beispielsweise in etwa 6 bar betragen.

Wie dies sowohl von Druckdrehfiltern als auch von Tellerfiltern an sich bekannt ist, kann auch bei der erfindungsgemäßen Filtervorrichtung vorgesehen sein, dass die Filtervorrichtung eine Mehrzahl von in Umfangsrichtung aufeinander folgenden Arbeitszonen aufweist.

So kann beispielsweise eine erste Arbeitszone als Aufbringungs-Arbeitszone ausgebildet sein. In dieser Aufbringungs-Arbeitszone kann die über eine erste Zuführleitung des stationären Zuführleitungssystems zugeführte, zu filtrierende Suspension auf das Filtermedium der sich gerade in der Aufbringungs-Arbeitszone aufhaltenden Filterzelle(n) aufgebracht werden. Das Druckmedium, beispielsweise ein Gas, etwa Luft, drückt die Suspensionsflüssigkeit durch das Filtermedium, so dass die Feststoffe als Filterkuchen auf dem Filtermedium zurückbleiben.

Ferner kann wenigstens eine Behandlungs-Arbeitszone vorgesehen sein, der über eine weitere Zuführleitung des stationären Zuführleitungssystems wenigstens ein Behandlungsmedium zum Behandeln der Feststoffe zugeführt werden kann. Die Behandlungs-Arbeitszone bzw. wenigstens eine der Behandlungs-Arbeitszonen kann dabei als Waschzone ausgebildet sein, in welcher über eine Zuführleitung des stationären Zuführleitungssystems zugeführte Waschflüssigkeit auf den Filterkuchen aufgebracht und durch das Druckmedium durch den Filterkuchen hindurchgedrückt wird. Darüber hinaus kann wenigstens eine der Behandlungs-Arbeitszonen als Entfeuchtungszone ausgebildet sein, in der dem Filterkuchen zumindest ein Teil der in ihm vorhandenen Feuchtigkeit entzogen wird. Üblicherweise erfolgt die Entfeuchtung durch Verdrängung der in den Poren des Filterkuchens vorhandenen Feuchtigkeit mittels eines Entfeuchtungsmediums. Als Entfeuchtungsmedium kann dabei beispielsweise das Druckmedium verwendet werden. Es ist aber auch möglich, den Filterkuchen unter Verwendung von überhitztem Dampf zu entfeuchten, wobei in diesem Fall neben der Verdrängungsentfeuchtung auch eine thermische Entfeuchtung durch Verdampfen der in den Poren des Filterkuchens vorhandenen Feuchtigkeit eine Rolle spielen kann. Schließlich ist es auch noch denkbar, den Filterkuchen durch mechanisches Komprimieren zu entfeuchten.

An dieser Stelle sei darauf verwiesen, dass unter "Entfeuchten" im Zusammenhang mit der vorliegenden Erfindung nicht notwendigerweise der vollständige Entzug von Feuchtigkeit verstanden wird. Dies trifft auch zu, obgleich die Entfeuchtungszone im allgemeinen Sprachgebrauch der Fachleute häufig "Trocknungszone" genannt wird. Wesentlich ist, dass der Filterkuchen in der Entfeuchtungszone nicht sich selbst überlassen wird, wobei es zu einem gewissen Feuchtigkeitsverlust durch Verdampfen kommen kann, sondern dass zum Entfeuchten aktiv auf den Filterkuchen eingewirkt wird.

Des Weiteren kann eine Austrags-Arbeitszone vorgesehen sein, in welcher die gewünschtenfalls gewaschenen und/oder entfeuchteten Feststoffe aus der Filtervorrichtung ausgetragen werden.

Schließlich kann auch noch eine Filtermediumvorbereitungs-Arbeitszone vorgesehen sein, in der das Filtermedium auf den nächsten Filtrierzyklus vorbereitet wird. So kann in dieser Filtermediumvorbereitungs-Arbeitszone die Restschicht von Feststoffen, die sich nach dem Austrag noch auf dem Filtermedium befindet, beispielsweise mit Wasser bestrahlt und/oder von der Rückseite des Filtermediums her einem Druckstoß ausgesetzt und dadurch aufgebrochen werden. Hierdurch kann einem Zusetzen des Filtermediums vorgebeugt werden.

Zur Verwirklichung der Ausbildung der Filtervorrichtung mit einer Mehrzahl von in Umfangsrichtung aufeinander folgenden Arbeitszonen ist es ferner vorteilhaft, wenn jeder Zuführleitung des stationären Zuführleitungssystems wenigstens eine Abführleitung des stationären Abführleitungssystems zugeordnet ist.

In Weiterbildung der Erfindung kann der Filterteller an seinem Außenumfang oder/und an seinem Innenumfang einen nach oben abstehenden Rand aufweisen. Ein derartiger Rand vereinfacht die Kuchenbildung, da er das Wegfließen der Suspension verhindert und somit sicherstellt, dass sich die Feststoffe auf dem Filtermedium ablagern, während die Suspensionsflüssigkeit durch das Filtermedium hindurchtritt. Grundsätzlich könnte der Rand auch am Druckbehälter ausgebildet bzw. vom Druckbehälter gebildet sein. Ein mit dem Filterteller umlaufender Rand vermeidet jedoch Dichtungsprobleme.

Wenn jeder Filterzelle eine gesonderte Abführleitung des umlaufenden Abführleitungssystems zugeordnet ist, so hat dies den Vorteil, dass die Filtrate der einzelnen Filterzellen voneinander getrennt abgeführt werden können. Aufgrund des Zusammenwirkens der Abführleitungen des umlaufenden Abführleitungssystems und des stationären Abführleitungssystems über die Drehverbindungsbaugruppe können somit die in einer bestimmten Arbeitszone zugeführten Medien auch über die dieser Arbeitszone zugeordnete Abführleitung des stationären Abführleitungssystems abgeführt werden.

Das arbeitszonenweise Zuführen und Abführen der Behandlungsmedien kann weiter dadurch unterstützt werden, dass die Anzahl der Filterzellen größer ist als die Anzahl derArbeitszonen. Hierdurch kann die Trennung der Arbeitszonen voneinander verbessert werden. Mit anderen Worten kann hierdurch der Bruchteil des in einer bestimmten Arbeitszone zugeführten Mediums verringert werden, der nicht über die dieser Arbeitszone zugeordnete Abführleitung des stationären Abführleitungssystems abgeführt wird. Vorteilhafterweise sind die Filterzellen derart ausgelegt, dass das einer Filterzelle in einer Arbeitszone zugeführte Medium vollständig in die dieser Arbeitszone zugeordnete Abführleitung des stationären Abführieltungssystems abgeführt worden ist, bevor die entsprechende Filterzelle die Arbeitszone verlässt bzw. die der Filterzelle zugeordnete Abführleitung des umlaufenden Abführleitungssystems nicht mehr mit der der Arbeitszone zugeordneten Abführleitung des stationären Abführleitungssystems fluidleitungsmäßig in Verbindung steht.

Durch das arbeitszonenweise Zuführen und Abführen der Behandlungsmedien ist es beispielsweise möglich, eine Mehrzahl von Waschzonen vorzusehen, und in diesen eine mehrstufige Gegenstromwaschung der Feststoffe durchzuführen.

Zur Ermöglichung des arbeitszonenweisen Zuführens und Abführens der Behandlungsmedien kann ferner vorgesehen sein, dass der Umfangswinkel, über den sich jede der den Filterzellen zugeordneten Abführleitungen des umlaufenden Abführleitungssystems in der Drehverbindungsbaugruppe erstreckt, kleiner ist als der Umfangswinkelabstand, den zwei in Umfangsrichtung aufeinander folgende Abführleitungen des stationären Abführleitungssystems in der Drehverbindungsbaugruppe voneinander aufweisen. Somit können die Arbeitszonen behandlungsmedium-technisch im Wesentlichen vollständig voneinander getrennt werden. Dadurch kann sichergestellt werden, dass zu keinem Zeitpunkt des Umlaufs des Filtertellers eine Abführleitung des umlaufenden Abführleitungssystems mit mehr als einer Abführleitung des stationären Abführleitungssystems in Verbindung steht.

In Weiterbildung der Erfindung können die Filterzellen voneinander getrennt ausgebildete Elemente sein. Dies ermöglicht eine verbesserte Wartungsfreundlichkeit, da im Bedarfsfall nicht der gesamte Filterteller ausgetauscht zu werden braucht, sondern einzelne Filterzellen ausgetauscht werden können.

Ferner ist es denkbar, dass der Filterteller an seinem radial äußeren Rand an dem Druckbehälter abgestützt ist. Der Durchmesser eines Filtertellers der erfindungsgemäßen Filtervorrichtung kann beispielsweise zwischen etwa 3,0 m und etwa 3,5 m betragen. Eine Abstützung des Filtertellers bzw. der Filterzellen nur an deren radial inneren Rand oder unter Verwendung von Zusatzelementen, beispielsweise Schrägstützen, ist grundsätzlich denkbar. Jedoch kann eine zusätzliche Abstützung des Filtertellers bzw. der Filterzellen am radial äußeren Rand die konstruktive Ausgestaltung der Abstützung vereinfachen.

In Weiterbildung der Erfindung kann wenigstens eine der Zuführleitungen zum Zuführen von zu filtrierender Suspension und/oder Behandlungsmedium an eine Überlaufeinheit mit einer Überlaufkante oder eine Riesel- oder Düseneinheit mit Austrittsöffnungen angeschlossen sein. Dabei kann die Überlaufkante bzw. die Größe und die Verteilung der Austrittsöffnungen derart gestaltet sein, dass über den gesamten Radius des Filtertellers pro Zeiteinheit und Flächeneinheit des Filtertellers die gleiche Menge an Suspension bzw. Behandlungsmedium abgegeben wird. Bei einer im Wesentlichen kreisscheibenförmigen Ausgestaltung des Filtertellers ist die Länge eines radial innen gelegenen Kreisbogenabschnitts, welcher während einer vorbestimmten Zeiteinheit eine Zuführeinheit passiert, kürzer als die Länge eines radial weiter außen gelegen Kreisbogenabschnitts gleicher Breite, welcher während derselben vorbestimmten Zeiteinheit die Zuführeinheit passiert. Um zu erreichen, dass über den gesamten Radius des Filtertellers pro Zeiteinheit und Flächeneinheit des Filtertellers die gleiche Menge an Suspension oder Behandlungsmedium abgegeben wird, muss dementsprechend die Abgabemenge pro radialem Längenabschnitt und Zeiteinheit in radialer Richtung des Filtertellers nach außen hin ansteigen. Dies kann beispielsweise über eine mit Aussparungen versehene Überlaufkante erreicht werden, wobei deren Aussparungsflächen über die Länge der Überlaufeinheit, d.h. in radialer Richtung, variieren. Im Falle einer Rieseleinheit kann die Abgabemenge über die Anzahl oder/und den Durchmesser der Austrittsöffnungen gesteuert werden.

Dies gilt in analoger Weise auch für nicht-kreisscheibenförmige Filterteller, beispielsweise Filterteller mit mehreckigem Umfang, bei welchen die Filterzellen z.B. trapezförmig ausgebildet sein können.

In Weiterbildung der Erfindung kann vorgesehen sein, dass die Zuführleitung an die Überlaufeinheit oder die Riesel- oder Düseneinheit deren jeweiliger Mengenmitte benachbart angeschlossen ist. Unter der "Mengenmitte" der Überlaufeinheit wird dabei jene Radialposition der Überlaufeinheit verstanden, radial innerhalb derer genauso viel Suspension bzw. Behandlungsmedium auf den Filterteller abgegeben wird wie radial außerhalb. Bei geeigneter Positionierung des Anschlusses der Zuführleitung kann auf aufwändige Verteilervorrichtungen zwischen der Zuführleitung und der Überlaufeinheit oder der Riesel- oder Düseneinheit verzichtet werden.

Um einen Übertritt von Suspension bzw. Behandlungsmedium von einer Arbeitszone zu einer anderen verhindern zu können, wird vorgeschlagen, dass wenigstens zwei in Umfangsrichtung aufeinander folgende Arbeitszonen mittels einer Dichtungsanordnung voneinander getrennt sind. Die Dichtungsanordnung kann beispielsweise wenigstens eine mit der Oberfläche des Filterkuchens in Kontakt stehende, beispielsweise auf dieser aufliegende, Dichtungslippe umfassen, welche einen Rückfluss von Suspensionsflüssigkeit bzw. Behandlungsmedium in eine benachbarte Arbeitszone zumindest behindert, wenn nicht gar vollständig verhindert.

Für den Fall, dass der Filterkuchen in der Entfeuchtungszone mittels Dampf entfeuchtet werden soll, wird vorgeschlagen, dass in dem Druckbehälter eine Dampfhaube angeordnet ist. Vorteilhafterweise kann der Dampf im Innenraum der Dampfhaube mit einem Druck vorliegen, der im Wesentlichen gleich dem Druck im restlichen Druckbehälter ist. Auf diese Weise verbleibt der Dampf einerseits in der Dampfhaube und kann sich nicht an kühlen Oberflächenabschnitten des Druckbehälters niederschlagen. Andererseits kann auch kein kühles Gas aus dem restlichen Druckbehälter in die Dampfhaube eindringen und dort zu einer Abkühlung des Dampfes führen. Aufgrund des erhöhten Drucks in der Dampfhaube wird der Dampf durch den Filterkuchen gedrückt und entfeuchtet diesen.

Es versteht sich, dass im Falle des nachstehend noch ausführlicher beschriebenen Feucht- bzw. Nassaustrags der Feststoffe auf deren vorangehende Entfeuchtung verzichtet werden kann.

Für den Austrag der Feststoffe wurde im Stand der Technik bereits eine Vielzahl von Lösungen vorgeschlagen. Bei einem passiv in seinerArbeitsstellung verharrenden Filterteller bzw. passiv in ihrer Arbeitsstellung verharrenden Filterzellen können die Feststoffe beispielsweise mittels eines Schneckenförderers, eines Schabers, eines Kratzers, beispielsweise eines Kettenkratzers, oder dergleichen ausgetragen werden. Es sind aber auch Austragsvarianten bekannt, bei welchen die Filterzellen des Filtertellers aktiv um ihre radial zur Rotationsachse verlaufende Längsachse gedreht bzw. gekippt werden, um die Feststoffe, gegebenenfalls unterstützt durch einen Druckrückstoß, aktiv abzuwerfen. So können die Feststoffe bei einer Drehung der Filterzelle um zwischen 90° und 180° schwerkraftbedingt in einen Bereich unterhalb des Filtertellers abgeworfen werden.

Denkbar ist auch, dass sich die Filterzelle um eine von der Längsachse abweichende Achse dreht oder/und in sich faltbar ist.

Aufgrund der insgesamt einfacheren Konstruktion der Filtervorrichtung und ihres robusten Aufbaus wegen wird erfindungsgemäß vorgeschlagen, dass einer Austrags-Arbeitszone der Filtervorrichtung ein Schneckenförderer mit wenigstens einer Austragsschnecke zugeordnet ist.

Falls der Filterteller mit einem radial äußeren, nach oben abstehenden Rand ausgebildet ist, kann das radial äußere Ende der Austragsschnecke radial innerhalb des Rands diesem benachbart angeordnet sein. Die Austragsschnecke wirft die Feststoffe dann lediglich über den Rand, von wo sie durch die nachgeförderten Feststoffe verdrängt und dadurch weitergefördert werden können.

Es ist jedoch auch denkbar, dass die Austragsschnecke einen innerhalb des äußeren Rands des Filtertellers angeordneten Längenabschnitt und einen außerhalb des äußeren Rands des Filtertellers angeordneten Längenabschnitt umfasst, die über eine gemeinsame, oberhalb des Rands verlaufende Antriebswelle miteinander verbunden sind. Auf diese Weise können die vom inneren Längenabschnitt über den Rand geworfenen Feststoffe vom äußeren Längenabschnitt weiter zur Austragsöffnung gefördert werden.

Zur Vermeidung der Aufteilung der Austragsschnecke in eine Mehrzahl von Abschnitten ist es ferner denkbar, den äußeren Rand des Filtertellers im Bereich der Austragsschnecke absenkbar auszubilden, beispielsweise mittels eines Klappmechanismus.

Im Hinblick auf die kreissektorförmige Ausbildung der Filterzellen des Filtertellers und der von innen nach außen ansteigenden Menge an abzutransportierenden Feststoffen, ist es vorteilhaft, wenn die Austragsschnecke eine konische Hüllfläche aufweist, deren unterer Umfangsabschnitt zur Oberfläche des Filtertellers im Wesentlichen parallel verläuft.

In diesem Zusammenhang sei darauf hingewiesen, dass unter der "Hüllfläche" der Austragsschnecke diejenige Fläche verstanden wird, die von der äußeren Begrenzungslinie der Förderschnecke bei deren Rotation gebildet wird.

Unabhängig von der Ausbildung der Hüllfläche der Austragsschnecke kann es zur Erhöhung der Austragseffektivität vorteilhaft sein, wenn die Drehrichtung der Antriebswelle der Austragsschnecke derart gewählt ist, dass sich der jeweils dem Filterteller nächstgelegene Abschnitt der Hüllfläche der Austragsschnecke entgegen der Bewegungsrichtung des Filtertellers bewegt. Für den Fall, dass sich zwischen den Filterzellen des Filtertellers ein Rand nach oben erstreckt, ist es vorteilhaft, dass der Austragsschnecke eine Hubvorrichtung zugeordnet ist, die sie bei Vorüberbewegung des Rands zwischen zwei aufeinander folgenden Filterzellen vorübergehend anhebt.

Um zu vermeiden, dass Feststoffe von der Austragsschnecke weggeschleudert werden, insbesondere auf bereits gereinigte Filterzellen, wird vorgeschlagen, dass die Austragsschnecke teilweise umhüllt ist, insbesondere derart, dass lediglich der Kontaktbereich zwischen Austragsschnecke und Feststoffschicht nicht umhüllt ist.

Die Austragsschnecke kann entweder einseitig gelagert sein, d.h. nur an dem Gehäuse des Druckbehälters oder in der Nähe des Druckbehältergehäuses abgestützt sein und frei in den Druckbehälter ragen, oder beidseitig gelagert sein, d.h. zusätzlich auch eine Lagerung im Inneren des Druckbehälters aufweisen, beispielsweise an wenigstens einer quer durch den Druckbehälter verlaufenden Strebe oder an einem vom deckelartigen oberen Behälterteil des Druckbehälters ausgehenden Träger.

Zum Antrieb der Austragsschnecke kann außerhalb des Druckbehälters ein Motor, beispielsweise ein Elektromotor, vorgesehen sein, welcher direkt oder über ein Getriebe mit der Antriebswelle der Austragsschnecke verbundenen sein kann.

Die von der Austragsschnecke ausgetragenen Feststoffe können, vorzugsweise schwerkraftunterstützt, zu einem mit der Druckschleuse versehenen Abschnitt befördert werden, an dem die Feststoffe aus der Filtervorrichtung ausgeschleust werden können. Die Druckschleuse kann beispielsweise eine Zellenradschleuse oder eine Klappenschleuse umfassen.

Die Druckschleuse kann an dem Abschnitt, an dem die Feststoffe aus der Filtervorrichtung abtransportiert werden, vorgesehen sein, um den Druckverlust zu reduzieren, welcher aufgrund von mit den Feststoffen aus der Filtervorrichtung austretendem Gas entsteht. Die Zellenradschleuse fördert Feststoffe kontinuierlich oder getaktet, die Klappenschleuse nur getaktet. Ein Eintrittsende und ein Austrittsende der Druckschleuse sind dabei voneinander druckdicht getrennt. Hierdurch kann die aus dem Druckbehälter austretende Gasmenge reduziert werden, was wiederum zur Folge hat, dass dem Druckbehälter zur Aufrechterhaltung eines im Wesentlichen konstanten Drucks entsprechend weniger Gas zugeführt werden muss.

Ein weiterer Weg, auf dem Gas aus dem Druckbehälter entweichen kann, ist über das Abführleitungssystem. Dem kann aber durch eine ausreichende Zuführung von Suspension oder Behandlungsmedium vorgebeugt werden, so dass ein übermässiger Gasverlust über das Abführleitungssystem verhindert werden kann. Auch im Bereich der Austrags-Arbeitszone und/oder der Arbeitszone, in der das Filtermedium für den nächsten Behandlungszyklus vorbereitet wird, besteht die Gefahr, dass Gas aus dem Druckbehälter entweichen kann, da das Filtermedium hier nicht mit Filterkuchen belegt ist. In diesen Bereichen ist es vorteilhaft, die Leitungen des umlaufenden Abführleitungssystems mittels stationärer Trennstopfen zu verschließen.

Grundsätzlich könnten die Abführleitungen des umlaufenden Abführleitungssystems von den Filterzellen nach radial außen geführt sein. Erfindungsgemäß wird jedoch vorgeschlagen, dass die Abführleitungen des umlaufenden Abführleitungssystems nach radial innen geführt sind und durch den Innenraum einer mit dem Filterteller betriebsfest verbundenen, zur Rotationsachse im Wesentlichen konzentrisch angeordneten Rotorwelle verlaufen, da dies eine räumlich kompakte Ausbildung der Drehverbindungsbaugruppe ermöglicht, welche eine Dichtungsanordnung zwischen dem umlaufenden Abführleitungssystem und dem stationären Abführleitungssystem umfasst.

Die Drehverbindungsbaugruppe, welche auch "Steuerkopf' genannt wird, kann dabei mit einer zur Rotationsachse orthogonal verlaufenden Kontaktfläche, als sogenannter Plansteuerkopf, oder auch mit einer in Umfangsrichtung um die Rotationsachse verlaufende Kontaktfläche, als sogenannter Halssteuerkopf, ausgeführt sein.

Vorteilhafterweise können die Abführleitungen des umlaufenden Abführleitungssystems innerhalb der Rotorwelle nach unten aus dem Druckbehälter hinaus und dort über die Drehverbindungsbaugruppe zu dem stationären Abführleitungssystem geführt sein. Hierdurch kann der Abfluss des Filtrats schwerkraftunterstützt stattfinden. Grundsätzlich ist es jedoch auch denkbar, die Drehverbindungsbaugruppe oberhalb oder innerhalb des Druckbehälters anzuordnen.

Das Filtrat kann, nachdem es das Filtermedium passiert hat, direkt zu der Rotorwelle hin abfließen. Es kann aber auch unterhalb des Filtermediums eine Ablaufrinne oder/und ein Sammelpunkt vorgesehen sein, über die bzw. den das Filtrat in die der Filterzelle zugeordnete Abführleitung des umlaufenden Abführleitungssystems gelangen kann.

Um die Rotorwelle mit dem Filterteller, welche vorzugsweise von unten in den Druckbehälter eintritt, relativ zu dem Druckbehälter drehbar zu lagern, können wenigstens zwei Rotorwellenlagerungen vorgesehen sein.

In einer ersten Ausführungsform kann sich die Rotorwelle von der Unterseite des Druckbehälters in den Druckbehälter hinein, durch den Filterteller hindurch und weiter nach oben bis zu dem oberen Behälterteil des Druckbehältergehäuses erstrecken. Die Rotorwelle kann hierbei zum einen an der Stelle, an der sie durch das Gehäuse des Druckbehälters hindurchtritt, und zum anderen an der Stelle der Innenseite des deckelartigen oberen Druckbehälterteils, bis zu der sie sich erstreckt, gelagert sein.

In einer zweiten Ausführungsform kann die Rotorwelle zum einen, wie bei der ersten Ausführungsform, an der Stelle, an der sie durch das Gehäuse des Druckbehälters hindurchtritt, und zum anderen in einem der Unterseite des Filtertellers benachbarten Bereich gelagert sein. Die dem Filterteller benachbarte Lagerung kann beispielsweise über wenigstens einen Quersteg, welcher sich durch den Druckbehälter erstreckt, gehaltert sein.

In einer dritten Ausführungsform kann die Rotorwelle an zwei dem Filterteller benachbarten Stellen über und unter dem Filterteller gelagert sein. Ähnlich zu der aus der zweiten Ausführungsform bekannten dem Filterteller benachbarten Lagerung, können auch die beiden Lagerungen der dritten Ausführungsform jeweils an wenigstens einem Quersteg gehaltert sein.

Eine vierte Ausführungsform der Rotorwellenlagerung kombiniert die oberhalb des Filtertellers angeordnete Lagerung der dritten Ausführungsform mit der aus der ersten und zweiten Ausführungsformen bekannten Lagerung an der Gehäusedurchtrittsstelle der Rotorwelle.

In einer fünften Ausführungsform der Rotorwellenlagerung ist die Rotorwelle zum einen, wie aus den ersten, zweiten und vierten Ausführungsformen bekannt, an der Gehäusedurchtrittsstelle und zum anderen in einem der Oberseite des Filtertellers benachbarten Bereich gelagert, wobei die Rotorwellenlagerung, welche oberhalb des Filtertellers angeordnet ist, nicht, wie aus den dritten und vierten Ausführungsformen bekannt, über einen Quersteg gehaltert ist, sondern, wie aus der ersten Ausführungsform bekannt, über eine Vorrichtung, welche mit dem oberen Behälterteil des Druckbehältergehäuses verbunden ist.

Eine sechste Ausführungsform der Rotorlagerung ist im Wesentlichen analog zu der zweiten Ausführungsform, mit dem Unterschied, dass die der Unterseite des Filtertellers benachbart angeordnete Lagerung nicht die Rotorwelle selbst lagert, sondern dort ein entsprechender an dem Filterteller angebrachter Abschnitt des mit der Rotorwelle betriebsfest verbundenen Filtertellers gelagert ist.

In konstruktiver Hinsicht sind insbesondere die zweite und die sechste Ausführungsform vorteilhaft, weil hierdurch sowohl das obere Behälterteil des Druckgehäuses einfach demontiert als auch eine mögliche Beeinträchtigung der oberhalb des Filtertellers angeordneten Funktionselemente vermieden werden kann.

In allen oben beschriebenen Ausführungsformen kann der Durchtritt der Rotorwelle durch das Gehäuse, beispielsweise mittels einer Stopfbuchse, eines Wellendichtrings, eines PS-Seals^{®} oder einer Gleitringdichtung, abgedichtet sein.

Vorteilhafterweise steht die Rotorwelle an dem dem Filterteller gegenüberliegenden Ende der Rotorwelle mit einer Antriebseinheit, beispielsweise einem Elektromotor oder einem Hydraulikantrieb, in Verbindung. Dabei kann die Antriebseinheit entweder direkt oder über eine Zwischeneinheit, beispielsweise ein Zahnradgetriebe, einen Riementrieb oder Kettentrieb, mit der Rotorwelle verbunden sein.

Alternativ kann die Antriebseinheit auch oberhalb oder sogar innerhalb des Druckbehälters angeordnet sein.

Die erfindungsgemäße Filtervorrichtung kann vollständig kontinuierlich arbeiten. Es ist aber grundsätzlich auch denkbar, sie getaktet kontinuierlich zu betreiben, d.h. sie in einem vorgegebenen Zeittakt immer um eine vorbestimmte Anzahl von Filterzellen, beispielsweise eine Filterzelle, weiterzudrehen. Auch bei der getaktet kontinuierlichen Betriebsweise durchläuft eine einer Filterzelle des Filtertellers aufgegebene Menge an Suspension nacheinander die verschiedenen Arbeitszonen, während weitere Suspensionsmengen anderen Filterzellen des Filtertellers zugeführt werden. Die getaktet kontinuierliche Betriebsweise unterscheidet sich somit von der Batch-Betriebsweise, bei der eine vorbestimmte Menge an Suspension stets allen Behandlungsschritten unterzogen wird, bevor erneut frische Suspension zugeführt wird.

Obgleich eine vollständig horizontale Anordnung des Filtertellers bzw. des Filtermediums bevorzugt ist, soll im Rahmen der vorliegenden Erfindung eine leicht konische Anordnung nicht ausgeschlossen werden.

Da die Suspensionsflüssigkeit und die Behandlungsmedien nach radial innen oder außen abgeführt werden, kann die erfindungsgemäße Filtervorrichtung mit einer Mehrzahl von übereinander angeordneten Filtertellern betrieben werden.

Die Erfindung wird im Folgenden anhand der beigefügten Zeichnungen an einem Ausführungsbeispiel beschrieben werden. Es stellt dar:
- Figur 1: eine Seitenquerschnittsansicht einerAusführungsform der erfindungsgemäßen Filtervorrichtung;
- Figur 2: eine Aufsicht auf die Filtervorrichtung der Figur 1 in Richtung des Pfeils II bei abgenommenem Behälterdeckel; und
- Figur 3: eine längs der Linie III-III der Figur 1 genommene Schnittansicht der erfindungsgemäße Filtervorrichtung der Figur 1.

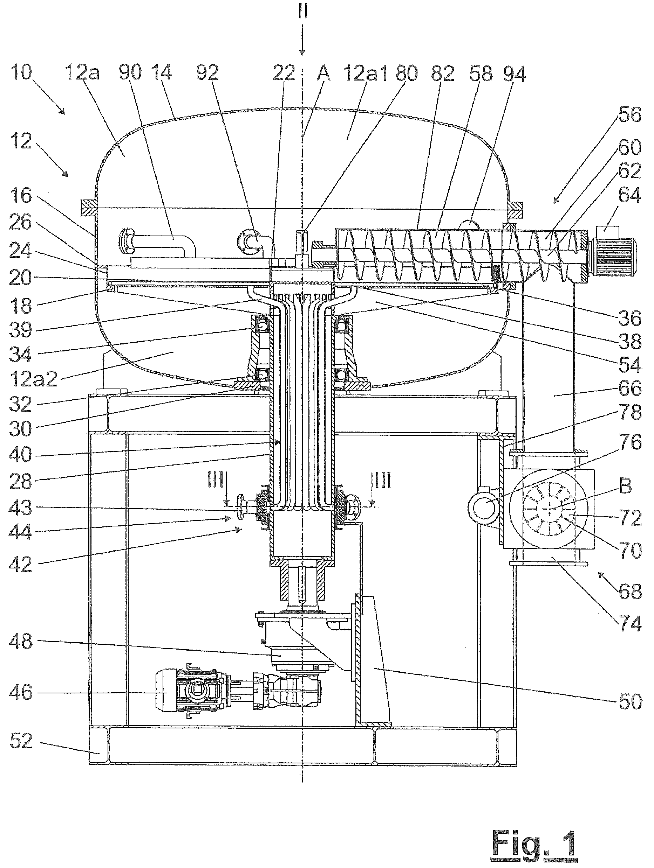

In Figur 1 ist eine Ausführungsform der erfindungsgemäßen Filtervorrichtung ganz allgemein mit 10 bezeichnet. Gemäß Figur 1 umfasst die Filtervorrichtung 10 ein Druckgehäuse 12, welches in ein deckelartiges oberes Bauteil 14 (im Folgenden auch "Behälterdeckel 14" genannt) und ein topfartiges unteres Behälterteil 16 (im Folgenden auch "Behälterunterteil 16" genannt) unterteilt ist.

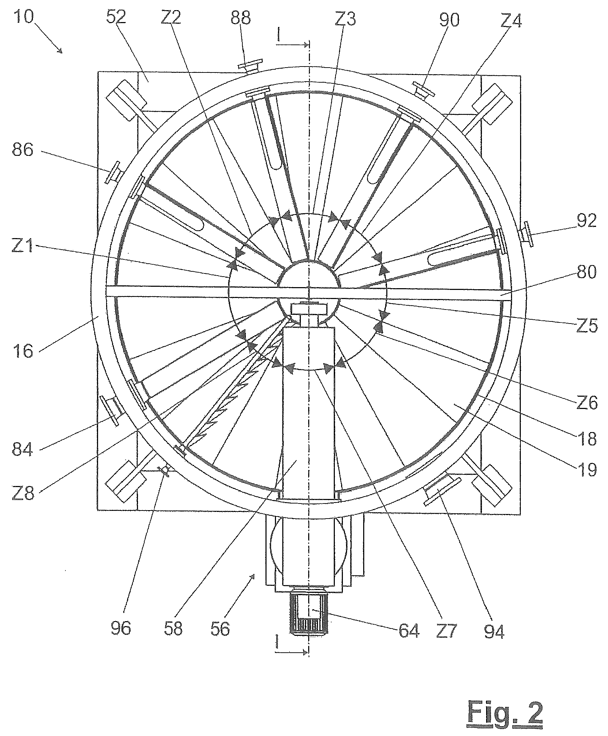

Im Behälterunterteil 16 ist ein in eine Mehrzahl von Filterzellen 19 (s. Figur 2) unterteilter Filterteller 18 angeordnet, auf welchem je Filterzelle 19 ein Filtermedium 20 angeordnet ist und welcher einen inneren Rand 22 und einen äußeren Rand 24 aufweist. In der Ausführungsform der Figur 1 ist der äußere Rand 24 an einem Vorsprung 26 des Behälterunterteils 16 des Druckgehäuses 12 abgestützt. Der Filterteller 18 ist betriebsfest mit einer Rotorwelle 28 verbunden, welche sich von dem Filterteller 18 ausgehend in im Wesentlichen vertikaler Richtung durch das Behälterunterteil 16 des Druckgehäuses 12 hindurch nach unten erstreckt. An der Durchtrittsstelle der Rotorwelle 28 durch das Behälterunterteil 16 des Druckgehäuses 12 ist dieses durch eine Stopfbuchse 30 abgedichtet, welche zur drehbaren Lagerung der Rotorwelle 28 auch eine untere Lagerung 32 und eine obere Lagerung 34 für die Rotorwelle 28 beinhaltet.

Zwischen jeder Filterzelle 19 und dem ihr zugeordneten Filtermedium 20 ist ein Zwischenraum 36 ausgebildet, welcher zu einer Anschlussstelle 38 hin abfällt. An dieser Anschlussstelle 38 ist der Zwischenraum 36 mit einer Abführleitung 39 eines von einer Mehrzahl gleichartiger Abführleitungen gebildeten Abführleitungssystems 40 verbunden. Auf diese Weise ist jeder Filterzelle 19 eine Abführleitung 39 des umlaufenden Abführleitungssystems 40 zugeordnet.

Die Abführleitungen 39 des umlaufenden Abführleitungssystems 40, welche vorzugsweise zueinander im Wesentlichen identische Maße aufweisen, führen in das Innere der Rotorwelle 28 und durch diese hindurch nach unten zu einer außerhalb des Druckbehälters 12 angeordneten Drehverbindungsbaugruppe 42. An der Drehverbindungsbaugruppe 42 ist eine Mehrzahl von Abführleitungen 43 eines stationären Abführleitungssystems 44 angeordnet. Die Abführleitungen 43 des stationären Abführleitungssystems 44 sind in Umfangsrichtung U um die Rotationsachse A verteilt angeordnet und führen radial von der Drehverbindungsbaugruppe 42 weg. D.h. die Drehverbindungsbaugruppe 42 ist als "Haissteuerkopf" ausgebildet.

Die Rotorwelle 28 und mit dieser der Filterteller 18 wird über einen außerhalb des Druckbehälters 12 angeordneten Elektromotor 46 angetrieben, welcher in dem dargestellten Ausführungsbeispiel mit der Rotorwelle 28 über ein Zahnradgetriebe 48 verbunden ist.

Die Rotorwelle 28, die Drehverbindungsbaugruppe 42, der Elektromotor 46 und das Getriebe 48 sind über eine Abstützvorrichtung 50 abgestützt, welche wiederum an einem Rahmen 52 der Filtervorrichtung 10 angebracht ist. Der Druckbehälter 12 ist direkt oder/und über Zwischenelemente an dem Rahmen 52 abgestützt.

Die Filtervorrichtung 10 umfasst ferner diverse durch den Umfang des unteren Behälterteils 16 des Druckbehälters 12 in den Druckbehälter 12 führende Zuführleitungen 84, 86, 88, 90, 92, 94 und 96, welche nachstehend mit Bezug auf Figur 2 im Detail beschrieben werden, die eine Aufsicht auf die Filtervorrichtung 10 in Richtung des Pfeils II in Figur 1 bei abgenommenem Gehäusedeckel 14 zeigt.

Der oberhalb des Filtertellers 18 bzw. der Filterzellen 19 befindliche Bereich der Filtervorrichtung 10 kann im Wesentlichen in acht Arbeitszonen Z₁ bis Z₈ aufgeteilt werden, wobei jede der Arbeitszonen einer der Zuführleitungen 84, 86, 88, 90, 92, 94, 96 bzw. der Austragsschnecke 56 zugeordnet ist.

Über die stationäre Zuführleitung 84 wird zu filtrierende Suspension auf das Filtermedium 20 der Filterzellen 19 aufgebracht. Je nachdem, ob sich der Filterteller 18 kontinuierlich oder getaktet dreht, wird die Aufbringung von Suspension auf das Filtermedium 20 entsprechend ebenfalls kontinuierlich oder getaktet durchgeführt. Die Aufbringung von Suspension auf das Filtermedium 20 der Filterzelle 19 ist dabei derart ausgelegt, dass trotz der im Wesentlichen kreissektorförmigen Ausbildung der Filterzellen 19 pro Zeiteinheit auf jede Flächeneinheit der sich in dieser Arbeitszone befindlichen Filterzelle(n) 19 die gleiche Menge an Suspension aufgebracht wird.

Die Suspensionsflüssigkeit der aufgebrachten Suspension wird durch den im Inneren des Druckbehälters 12 herrschenden Druck durch das Filtermedium 20 gedrückt, so dass sich die in der Suspension enthaltenen Feststoffe als Filterkuchen auf dem Filtermedium 20 niederschlagen, während die Suspensionsflüssigkeit durch das umlaufende Abführleitungssystem 40 und das stationäre Abführleitungssystem 44 abgeleitet werden.

Über die stationäre Zuführleitung 86 wird ein Behandlungsmedium, beispielsweise eine Waschflüssigkeit, auf den Filterkuchen aufgebracht. Durch den im Inneren des Druckbehälters 12 herrschenden Druck wird das Behandlungsmedium durch den Filterkuchen und das Filtermedium 20 zum Abführleitungssystem 40/44 hin gedrückt, wobei es unerwünschte Verunreinigungen aus dem Filterkuchen mit sich führt.

Die Zuführleitungen 88, 90, 92 dienen ebenfalls jeweils der Zuführung von Behandlungsmedium, insbesondere Waschflüssigkeit für eine zweite, dritte und vierte Waschung des Filterkuchens.

Die durch die stationären Zuführleitungen 86, 88, 90, 92 zugeführten Behandlungsmedien können identisch oder/und voneinander verschieden sein. Beispielsweise ist es möglich, in den vier Arbeitszonen Z₂ bis Z₅ eine Gegenstromwaschung durchzuführen, bei der der fünften Arbeitszone Z₅ über die Zuführleitung 92 saubere Waschflüssigkeit zugeleitet wird, um den in den Arbeitszonen Z₂ bis Z₄ bereits dreimal vorgeschwaschenen Filterkuchen ein letztes Mal mit sauberer Waschflüssigkeit zu waschen. Die aus der fünften Arbeitszone Z₅ ausgeleitete Waschflüssigkeit wird anschließend über die Zuführleitung 90 in die vierte Arbeitszone Z₄ eingeleitet usw., bis schließlich die aus der zweiten Arbeitszone Z₂ bzw. ersten Waschzone ausgeleitete Waschflüssigkeit vollständig aus der Filtervorrichtung 10 ausgeleitet wird.

Die sechste Arbeitszone Z₆ dient der Entfeuchtung des Filterkuchens. Daher wird dieser Arbeitszone über die stationären Zuführleitung 94 ein Entfeuchtungsmedium zugeführt. In dem dargestellten Ausführungsbeispiel wird ein Gas als Entfeuchtungsmedium eingesetzt und dieses gleichzeitig als Druckgas verwendet. Somit braucht keine gesonderte Druckgas-Zuführungsleitung vorgesehen zu werden.

Alternativ kann aber auch überhitzter Dampf als Entfeuchtungsmedium eingesetzt werden. In diesem Fall ist es vorteilhaft, in dem Druckbehälter 12 ferner eine (nicht dargestellte) zum Filterkuchen hin offene Dampfhaube anzuordnen, in die der überhitzte Dampf eingeleitet wird. Um verhindern zu können, dass der Dampf aus der Dampfhaube austritt und sich an kühlen Oberflächenabschnitten des Behälterdeckels 14 niederschlägt, wird der in der Dampfhaube herrschende Druck vorteilhafterweise auf einen etwas niedrigeren Wert eingestellt als der Druck im Druckbehälter 12.

Der Entfeuchtungs-Arbeitszone Z₆ folgt eine Austrags-Arbeitszone Z₇, in welcher der Filterkuchen mittels einer nachstehend noch detailliert zu beschreibenden Austragsschnecke 56 von dem Filterteller 18 nach radial außen abtransportiert wird.

In einer letzten Arbeitszone Z₈ werden auf dem Filtermedium 20 eventuell verbleibende Feststoffreste aufgebrochen, so dass sie das Filtermedium 20 nicht mehr zusetzen. Hierzu kann über die stationäre Zuführleitung 96 ein Behandlungsmedium, wie beispielsweise Wasser, mittels Düsen auf das Filtermedium 20 aufgespritzt werden. Zusätzlich oder alternativ kann über das dieser Arbeitszone zugeordnete Abführleitungssystem ein Druckrückstoß von der Rückseite des Filtermediums 20 her auf den Filterkuchen ausgeübt werden, um den Filterkuchen vom Filtermedium 20 zu lösen.

Nachzutragen ist noch, dass die Arbeitszonen Z₁ bis Z₈ voneinander durch (nicht dargestellte) Dichtungsanordnungen getrennt sein können, wodurch vermieden oder zumindest vermindert werden kann, dass sich die Behandlungsmedien einer Arbeitszone mit jenen einer anderen Arbeitszone vermischen.

Wie bereits erwähnt ist in der Austragszone Z₇ eine Austragsschnecke 56 vorgesehen, welche zum Abtransport der nach einer Filtration auf dem Filtermedium 20 zurückbleibenden Feststoffe aus der Filtervorrichtung 10 dient. Um eine Kollision mit dem äußeren Rand 24 des Filtertellers 18 zu vermeiden, ist die Austragsschnecke 56 in einen innerhalb des äußeren Randes 24 angeordneten Längenabschnitt 58 und einen außerhalb des äußeren Randes 24 angeordneten Längenabschnitt 60 unterteilt. Beide Längenabschnitte 58 und 60 werden über dieselbe Antriebswelle 62 angetrieben, welche wiederum direkt oder über ein Getriebe von einem Elektromotor 64 angetrieben wird.

Die auf dem Filtermedium 20 aufliegenden Feststoffe werden von dem Längenabschnitt 58 der Austragsschnecke 56 auf dem Filterteller 18 radial nach außen und dort über den äußeren Rand 24 des Filtertellers 18 befördert. Der äußere Längenabschnitt 60 der Austragsschnecke 56 transportiert die Feststoffe von dort weiter zu einem Austragsschacht 66, in welchem sie nach unten zu einer Zellenradschleuse 68 fallen. Die Zellenradschleuse 68 umfasst ein Zellenrad 70, welches eine Mehrzahl von Zellen 72 aufweist. Die Zellen 72 des Zellenrads 70 werden mit den von oben herabfallenden Feststoffen befüllt. Das Zellenrad 70 dreht sich dabei in kontinuierlicher oder getakteter Weise um eine im Wesentlichen horizontale Achse B. Hat sich das Zellenrad 70 soweit um die Achse B gedreht, dass eine mit Feststoffen befüllte Zelle 72 mit einem Austrittsende 74 der Zellenradschleuse 68 in Verbindung steht, so fallen die Feststoffe aus der Zelle 72 und verlassen die Filtervorrichtung 10. Das Austrittsende 74 der Zellenradschleuse 68 ist dabei von der Seite der Zellenradschleuse 68, an welcher die Zellen 72 des Zellenrads 70 mit Feststoffen befüllt werden, druckdicht getrennt. Mittels der durch die Zellenradschleuse 68 bereitgestellten Druckschleuse kann der Druck in dem Druckbehälter 12 im Wesentlichen verlustfrei aufrecht erhalten werden.

Das Zellenrad 70 der Zellenradschleuse 68 ist über einen Elektromotor 76 entweder direkt oder über ein Getriebe angetrieben. Der Elektromotor 76, die Zellenradschleuse 68 und der Austragschacht 66 sind über eine Haltevorrichtung 78 mit dem Rahmen 52 verbunden. Ferner ist die Austragsschnecke 56 einerseits an ihrer Durchtrittsstelle durch den Druckbehälter 12 und andererseits an einer quer durch das Behälterunterteil 16 des Druckbehälters 12 verlaufenden Strebe 80 mittels einer (nicht dargestellten) Halterung gehaltert.

Die Austragsschnecke 56 ist ferner von einem Gehäuse 82 umgeben, welches einerseits ein Wegschleudern von Feststoffen von derAustragsschnecke 56 verhindert und andererseits der Antriebswelle 62 derAustragsschnecke 56 an den beiden axialen Enden des Gehäuses 82 eine Lagerung bietet. Außerhalb des Druckbehälters 12 dient das Gehäuse 82 ferner der Druckabdichtung sowie der Halterung des Elektromotors 64.

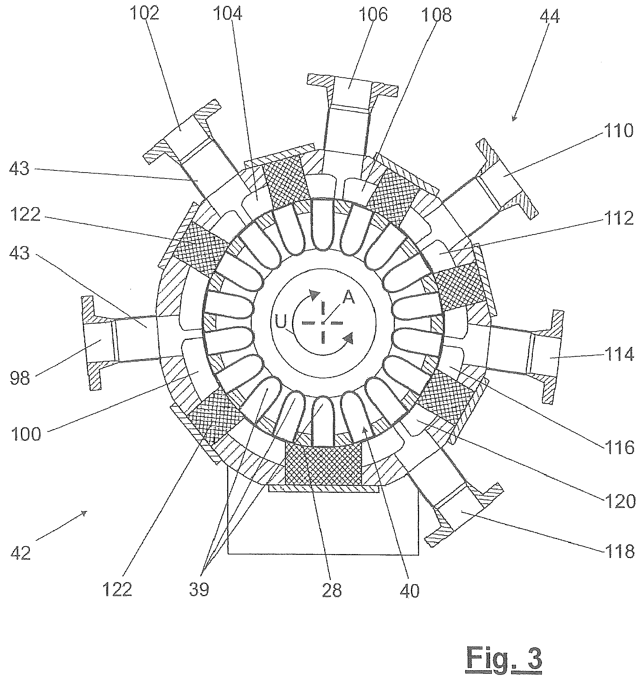

Nachstehend soll mit Bezug auf Figur 3 der Aufbau der Drehverbindungsbaugruppe 42 näher erläutert werden.

Figur 3 zeigt eine Schnittansicht durch die Drehverbindungsbaugruppe 42 längs der Linie III-III der Figur 1. In dieser Schnittansicht sind die in diesem Bereich horizontal innerhalb der Rotorwelle 28 verlaufenden Abführleitungen 39 des umlaufenden Abführleitungssystems 40 zu erkennen, welche zu der Außenseite der Rotorwelle 28 hin geöffnet sind.

In Figur 3 sind ferner Abführleitungen 98, 102, 106, 110, 114, 118 des stationären Abführleitungssystems 44 zu erkennen. Jeweils einer der Abführleitungen 98, 102, 106, 110, 114, 118 des stationären Abführleitungssystems 44 ist ein Aufnahmebereich 100, 104, 108, 112, 116, 120 zugeordnet, welche durch Dichtungselemente 122 voneinander getrennt sind. Dabei ist die Breite eines jeden Dichtungselements 122 größer als die maximale Breite einer Öffnung einer Abführleitung des umlaufenden Abführleitungssystems 40 zur Außenseite der Rotorwelle 28 hin. Somit wird vermieden, dass eine Abführleitung 39 des umlaufenden Abführleitungssystems 40 gleichzeitig mit mehreren Aufnahmebereichen in Verbindung stehen kann.

Das einer Filterzelle zugeführte Behandlungsmedium wird nach der Filtration der der Filterzelle 19 zugeordneten Abführleitung 39 des umlaufenden Abführleitungssystems 40 zugeführt. Anschließend gelangt das Filtrat in den Aufnahmebereich, mit welchem die entsprechende Abführleitung 39 des umlaufenden Abführleitungssystems 40 gerade in Verbindung steht, von wo aus es über die diesem Aufnahmebereich zugeordnete Abführleitung des stationären Abführleitungssystems 44 aus der Filtervorrichtung 10 abtransportiert wird.

Die Abführleitungen 98, 102, 106, 110, 114, 118 bzw. die Aufnahmebereiche 100, 104, 108, 112, 116, 120 der Abführleitungen des stationären Abführleitungssystems 44 sind dabei derart ausgelegt, dass die jeweilige Breite, d.h. der Umfangswinkel, eines Aufnahmebereichs mit der Breite, d.h. dem Umfangswinkel, einer dem Aufnahmebereich zugeordneten Arbeitszone korreliert. Bei einem sich drehenden Filterteller 18 steht dementsprechend eine Abführleitung 39 des umlaufenden Abführleitungssystems 40 so lange mit einem einer Arbeitszone zugeordneten Aufnahmebereich in Verbindung wie die Filterzelle, welche dieser Abführleitung 39 des umlaufenden Abführleitungssystems 40 zugeordnet ist, mit dieser Arbeitszone in Verbindung steht. Hierdurch kann das in der jeweiligen Arbeitszone zugeführte Behandlungsmedium nach der Filtration separat aus der Filtervorrichtung 10 abgeführt werden.

Über die Abführleitung 118 des stationären Abführleitungssystems 44 wird das in dem Aufnahmebereich 120 aus der Entfeuchtung-Arbeitszone abgeführte Entfeuchtungsmedium inklusive der aus dem Filterkuchen ausgetragenen flüssigen Bestandteilen aus der Filtervorrichtung 10 abgeführt.

Nachzutragen ist noch, dass der Filterteller 18 zu seiner Stabilisierung mit einer Mehrzahl von Schrägstützen 54 versehen ist. Diese brauchen in dem dargestellten Ausführungsbeispiel aber lediglich das Gewicht des Filtertellers 18 nebst dem darauf ruhenden Filterkuchen und der jeweiligen Behandlungsmedien zu tragen. Um dies zu ermöglichen, weist der Innenraum 12a des Druckbehälters einen oberhalb des Filtertellers 18 angeordneten Bereich 12a1 und einen unterhalb des Filtertellers 18 angeordneten Bereich 12a2, die miteinander über den Spalt zwischen dem Druckbehälter 12 und dem äußeren Rand des Filtertellers 18 in Druckausgleichsverbindung stehen. Somit herrscht in beiden Bereichen 12a1 und 12a2 der gleiche Druck, so dass die Oberseite und die Unterseite des Filtertellers 18 mit dem gleichen Druck beaufschlagt werden und somit netto keine Druckkraft auf den Filterteller 18 ausüben.

## Patentansprüche

1. Filtervorrichtung (10) zum Abtrennen von Feststoffen aus einer die Feststoffe und eine Suspensionsflüssigkeit enthaltenden Suspension, wobei die Filtervorrichtung (10) umfasst:
einen Druckbehälter (12) mit einer Zuführung für Druckmedium, mittels dessen der Innenraum des Druckbehälters (12) auf einen verglichen mit dem Umgebungsdruck außerhalb des Druckbehälters (12) erhöhten Druck bringbar ist,
wenigstens einen in dem Druckbehälter (12) aufgenommenen, um eine im Wesentlichen vertikal verlaufende Rotationsachse (A) drehbar gelagerten Filterteller (18), welcher eine Mehrzahl von Filterzellen (19) aufweist,
wobei jeder Filterzelle (19) ein Filtermedium (20) zugeordnet ist, dessen eine Seite, die Hochdruckseite, dem Innenraum des Druckbehälters (12) zugewandt ist, während die vom Innenraum des Druckbehälters (12) abgewandte Seite, die Niederdruckseite, mit einem mit dem Filterteller (18) umlaufenden Abführleitungssystem (40) verbunden ist, dem seinerseits über eine Drehverbindungsbaugruppe (42) ein stationäres Abführleitungssystem (44) nachgeordnet ist,
ein stationäres Zuführleitungssystem zum Zuführen von zu filtrierender Suspension sowie zum Zuführen wenigstens eines Behandlungsmediums zum Behandeln des in den Filterzellen (19) auf dem Filtermedium (20) von den Feststoffen gebildeten Filterkuchens, und
eine Druckschleuse zum Austrag der Feststoffe.

2. Filtervorrichtung (10) nach Anspruch 1,
**dadurch gekennzeichnet, dass** das Gehäuse des Druckbehälters (12) in wenigstens zwei Abschnitte (14, 16) unterteilt ist,
wobei vorzugsweise wenigstens ein Abschnitt (14, 16) des Gehäuses des Druckbehälters (12) frei von Funktionselementen der Filtervorrichtung (10) ist.

3. Filtervorrichtung (10) nach einem der vorhergehenden Ansprüche, **dadurch gekennzeichnet, dass** der Druckbehälter (12) wenigstens zwei Druckräume umfasst, nämlich einen oberhalb des Filtertellers (18) angeordneten Druckraum und einen unterhalb des Filtertellers (18) angeordneten Druckraum, welche vorzugsweise miteinander in Druckausgleichsverbindung stehen.

4. Filtervorrichtung (10) nach einem der vorhergehenden Ansprüche, **dadurch gekennzeichnet, dass** die Filtervorrichtung (10) eine Mehrzahl von in Umfangsrichtung des Filtertellers (18) aufeinander folgenden Arbeitszonen aufweist,
wobei vorzugsweise die Anzahl der Filterzellen (19) größer ist als die Anzahl der Arbeitszonen.

5. Filtervorrichtung (10) nach einem der vorhergehenden Ansprüche, **dadurch gekennzeichnet, dass** jeder Zuführleitung (84, 86, 88, 90, 92, 94, 96) des stationären Zuführleitungssystems wenigstens eine Abführleitung (98, 102, 106, 110, 114, 118) des stationären Abführleitungssystems (44) zugeordnet ist.

6. Filtervorrichtung (10) nach einem der vorhergehenden Ansprüche, **dadurch gekennzeichnet, dass** der Filterteller (18) an seinem Außenumfang oder/und an seinem Innenumfang einen nach oben abstehenden Rand (22, 24) aufweist,
wobei vorzugsweise der Filterteller (18) an seinem radial äußeren Rand (24) an dem Druckbehälter (12) abgestützt ist.

7. Filtervorrichtung (10) nach einem der vorhergehenden Ansprüche, **dadurch gekennzeichnet, dass** jeder Filterzelle (19) eine gesonderte Abführleitung des umlaufenden Abführleitungssystems (40) zugeordnet ist.

8. Filtervorrichtung (10) nach einem der vorhergehenden Ansprüche, **dadurch gekennzeichnet, dass** der Umfangswinkel, über den sich jede der den Filterzellen (19) zugeordneten Abführleitungen des umlaufenden Abführleitungssystems (40) in der Drehverbindungsbaugruppe (42) erstreckt, kleiner ist als der Umfangswinkelabstand, den zwei in Umfangsrichtung aufeinander folgende Abführleitungen (98, 102, 106, 110, 114, 118) des stationären Abführleitungssystems (44) in der Drehverbindungsbaugruppe (42) voneinander aufweisen.

9. Filtervorrichtung (10) nach einem der vorhergehenden Ansprüche, **dadurch gekennzeichnet, dass** die Filterzellen (19) voneinander getrennt ausgebildete Elemente sind.

10. Filtervorrichtung (10) nach einem der vorhergehenden Ansprüche, **dadurch gekennzeichnet, dass** wenigstens eine der Zuführleitungen (84, 86, 88, 90, 92, 94, 96) zum Zuführen von zu filtrierender Suspension oder/und Behandlungsmedium an eine Überlaufeinheit mit einer Überlaufkante oder eine Riesel- oder Düseneinheit mit Austrittsöffnungen angeschlossen ist, wobei die Überlaufkante oder die Größe und die Verteilung der Austrittsöffnungen derart gestaltet ist bzw. sind, dass über den gesamten Radius des Filtertellers (18) pro Zeiteinheit und Flächeneinheit des Filtertellers (18) die gleiche Menge an Suspension oder Behandlungsmedium abgegeben wird,
wobei vorzugsweise die wenigstens eine Zuführleitung (84, 86, 88, 90, 92, 94, 96) des stationären Zuführleitungssystems an die Überlaufeinheit oder die Riesel- oder Düseneinheit an deren jeweiliger Mengenmitte oder dieser benachbart angeschlossen ist.

11. Filtervorrichtung (10) nach Anspruch 4,
**dadurch gekennzeichnet, dass** wenigstens zwei in Umfangsrichtung aufeinander folgende Arbeitszonen mittels einer Dichtungsanordnung voneinander getrennt sind.

12. Filtervorrichtung (10) nach einem der vorhergehenden Ansprüche, **dadurch gekennzeichnet, dass** in dem Druckbehälter (12) eine Dampfhaube angeordnet ist, in deren Innenraum der Dampf mit einem Druck vorliegt, der höher ist als der Umgebungsdruck außerhalb des Druckbehälters (12).

13. Filtervorrichtung (10) nach Anspruch 4,
**dadurch gekennzeichnet, dass** einer Austrags-Arbeitszone der Filtervorrichtung (10) ein Schneckenförderer mit wenigstens einer Austragsschnecke (56) zugeordnet ist,
wobei vorzugsweise die Austragsschnecke (56) einen innerhalb des äußeren Rands (24) des Filtertellers (18) angeordneten Längenabschnitt (58) und einen außerhalb des äußeren Rands (24) des Filtertellers (18) angeordneten Längenabschnitt (60) umfasst, die über eine gemeinsame, oberhalb des Rands (24) verlaufende Antriebswelle (62) miteinander verbunden sind.

14. Filtervorrichtung (10) nach einem der vorhergehenden Ansprüche, **dadurch gekennzeichnet, dass** die Druckschleuse eine Zellenradschleuse (68) umfasst.

15. Filtervorrichtung (10) nach einem der vorhergehenden Ansprüche, **dadurch gekennzeichnet, dass** die Abführleitungen des umlaufenden Abführleitungssystems (40) durch den Innenraum einer mit dem Filterteller (18) betriebsfest verbundenen, zur Rotationsachse (A) im Wesentlichen konzentrisch angeordneten Rotorwelle (28) verlaufen.
